# EUROPEAN PATENT SPECIFICATION

(11) **EP 1 515 021 B1**
(45) Date of publication and mention of the grant of the patent: **14.04.2010**
(21) Application number: 04021379.5
(22) Date of filing: 08.09.2004
(51) Int. Cl.: F02B 37/22, F01N 3/20, F02B 37/24, F02D 41/02

(54) **Control apparatus for variable capacity turbocharger**
Steuerung für Turbolader mit variabler Kapazität
Appareil de commande pour turbo-compresseur de suralimentation à charge variable

(30) Priority: 09.09.2003 JP 2003317224
(43) Date of publication of application: 16.03.2005
(73) Proprietor: Toyota Jidosha Kabushiki Kaisha, Toyota-shi, Aichi-ken, 471-8571 (JP); DENSO CORPORATION, Kariya-city, Aichi-pref. 448-8661 (JP); KABUSHIKI KAISHA TOYOTA JIDOSHOKKI, Kariya-shi, Aichi-ken 448-8671 (JP)
(72) Inventor: Yokoi, Tatsuhisa, Toyota-shi Aichi-ken, 471-8571 (JP); Tsuiki, Toyomori, Kariya-city Aichi-pref 448-8661 (JP); Inaba, Takayoshi, Kariya-city Aichi-pref 448-8661 (JP); Honjo, Fuminori, Kariya-shi Aichi-ken, 448-8671 (JP)
(74) Representative: Kuhnen & Wacker

(56) References cited:
- EP-A- 0 454 943
- EP-A- 1 077 319
- EP-A- 1 273 779
- PATENT ABSTRACTS OF JAPAN vol. 1999, no. 08, 30 June 1999 (1999-06-30) & JP 11 062602 A (TOYOTA MOTOR CORP), 5 March 1999 (1999-03-05)

## Description

### BACKGROUND OF THE INVENTION

### 1. Field of the Invention

The invention relates to a control apparatus for a variable capacity turbocharger which regulates a boost pressure by controlling an exhaust gas flow path area on the upstream of a turbine wheel upstream of purifying means for purifying exhaust gas of an internal combustion engine.

### 2. Description of the Related Art

As is well known, a turbocharger includes a turbine wheel that is rotated by exhaust gas flowing through an exhaust passage in an internal combustion engine, and a compressor wheel that forces air in an intake passage of the internal combustion engine into a combustion chamber. The turbine wheel and the compressor wheel are connected together so that they rotate as a single unit via a rotor shaft. When exhaust gas strikes the turbine wheel and the turbine wheel rotates, that rotation is transmitted via the rotor shaft to the compressor wheel. When the compressor wheel then rotates, air in the intake passage is forced into the combustion chamber.

In recent years, variable capacity turbochargers have been realized which optimize the boost pressure according to the operating state of the internal combustion engine by variably controlling the flow rate and speed of the flow and the like of the exhaust gas that strikes the turbine wheel. The variable nozzle turbocharger is one such variable capacity turbocharger.

The variable nozzle turbocharger is provided with an exhaust gas flow path through which exhaust gas that strikes the turbine wheel flows. This exhaust gas flow path is formed in the direction of rotation of the turbine wheel, and so as to encompass the outer periphery of the turbine wheel. Therefore, the exhaust gas that flows through the exhaust gas flow path flows toward the axis of the turbine wheel. A plurality of nozzle vanes able to change the speed of the flow of the exhaust gas that strikes the turbine wheel are provided in the exhaust gas flow path. These nozzle vanes are arranged equiangularly centered around the axis of the turbine wheel and all open and close in sync with one another.

The speed of the flow of the exhaust gas that strikes the turbine wheel is regulated by opening and closing the nozzle vanes in sync, and thereby changing the size of the gap between adjacent nozzle vanes, i.e., changing the opening amount of the nozzle vanes. Regulating the speed of the flow of the exhaust gas by opening and closing the nozzle vanes in this way enables the rotation speed of the turbine wheel to be regulated, which in turn enables the boost pressure of the internal combustion engine to be regulated.

A purifying device for purifying the exhaust gas is also provided in the exhaust passage of the internal combustion engine. However, in internal combustion engines such as diesel engines, in which the particles in the exhaust gas can not be ignored, the purifying device may become clogged.

Technology, such as that described in JP(A) 11-62602, was therefore proposed which executes a control to increase the boost pressure when it has been determined that the purifying device is clogged. The increase in the boost pressure results in an exhaust gas that has a high temperature and a high pressure, which is used to remove the particles adhered to the purifying device.

When the purifying device becomes clogged, a pressure difference does not develop as easily between the upstream side and the downstream side of the turbine wheel, which makes it difficult to achieve an increase in the rotation speed of the turbine wheel. Therefore, if feedback control of the opening amount of the nozzle vanes is performed in order to make the actual boost pressure match the target boost pressure, for example, the opening amount of the nozzle vanes may be excessively decreased, which may have adverse effects. For example, it may result in an excessive increase in the pressure on the upstream side of the purifying device which may impair the reliability of the internal combustion engine.

In this way, the control apparatus for a variable capacity turbocharger which regulates a boost pressure by controlling an exhaust gas flow path area on an upstream side of a turbine wheel upstream of purifying device for purifying exhaust gas in an internal combustion engine is susceptible to various problems if the purifying device becomes clogged.

Further, document EP 1 273 779 A2 discloses a device for regeneration of a diesel particulate filter for a diesel engine, wherein an oxidation promoting catalyst which converts nitrogen monoxide in exhaust gas to nitrogen dioxide, and a diesel particulate filter which traps soot in the exhaust gas, are installed in an exhaust gas passage of a diesel engine. A control unit determines whether or not it is necessary to regenerate the filter based on the exhaust gas pressure detected by an exhaust gas pressure sensor, and when it is necessary to regenerate the filter, it increases the nitrogen monoxide in the exhaust gas by performing an advance correction of the fuel injection timing of a fuel injector so as to promote generation of nitrogen dioxide by the oxidation promoting catalyst.

### SUMMARY OF THE INVENTION

In view of the foregoing problems, it is an object of this invention to more suitably control a flow path area, even if purifying means for purifying exhaust gas in an internal combustion engine is clogged, when regulating a boost pressure by controlling an exhaust gas flow path area on an upstream side of a turbine wheel that is upstream of the purifying means.

One aspect of the invention therefore relates to a control apparatus for a variable capacity turbocharger which regulates a boost pressure by controlling an exhaust gas flow path area on an upstream side of a turbine wheel that is upstream of purifying means for purifying exhaust gas in an internal combustion engine, which is characterised by including limiting means for limiting an amount that the flow path area is decreased according to a clogged state of the purifying means.

This control apparatus makes it possible to preferably avoid an excessive increase in pressure on the upstream side in the purifying means by limiting the amount that the flow path area is decreased according to the clogged state of the purifying means. This structure therefore enables the flow path area to be controlled more suitably when the purifying means is clogged.

Also, in the foregoing control apparatus, the control apparatus may be adapted to perform feedback control of the flow path area to make an actual boost pressure match a target boost pressure, and the limiting means may limit the amount that the flow path area is decreased according to a feedback correction quantity calculated based on a deviation between the actual boost pressure and the target boost pressure.

When the purifying means is clogged, a pressure difference does not develop as easily between the upstream side and the downstream side of the turbine wheel, which makes it difficult to achieve an increase in the rotation speed of the turbine wheel. As a result, the ability of the actual boost pressure to follow the target boost pressure declines when performing feedback control of the flow path area in order to make the actual boost pressure the target boost pressure. When the ability of the actual boost pressure to follow the target boost pressure declines in this way, the absolute value of the feedback correction value tends to increase to a large value.

By limiting the amount that the flow path area is decreased by the feedback correction quantity, this structure makes it is possible to preferably avoid an excessive increase in pressure on the upstream side of the purifying means due to an excessive decrease in the flow path area.

Also, in the foregoing control apparatus, the feedback control may include integral control, and the amount that the flow path area is decreased may include an amount that the flow path area is decreased by the integral control.

During integral control of the flow path area based on the deviation between the actual boost pressure and the target boost pressure, the absolute value of the feedback correction quantity for the integral control tends to increase when that deviation is not eliminated quickly.

By limiting the amount that the flow path area is decreased by the integral control, this structure makes it possible to preferably avoid an excessive decrease in the flow path area when the ability of the actual boost pressure to follow the target boost pressure declines due to clogging of the purifying means.

Also, the control apparatus may perform feedback control of the flow path area to make an actual boost pressure match a target boost pressure, and the limiting means may limit the amount that the flow path area is decreased by limiting the setting of the target boost pressure according to the clogged state of the purifying means.

When the purifying means is clogged, a pressure difference does not develop as easily between the upstream side and the downstream side of the turbine wheel, which makes it difficult to achieve an increase in the rotation speed of the turbine wheel. As a result, the ability of the actual boost pressure to follow the target boost pressure declines when performing feedback control on the flow path area in order to make the actual boost pressure the target boost pressure. If the ability of the actual boost pressure to follow the target boost pressure declines in this way, there is a tendency to excessively decrease the flow path area in order to compensate for that decline due to clogging of the purifying means.

This structure thus makes it possible to preferably avoid an excessively decrease in the flow path area by limiting the setting of the target boost pressure according to the clogged state of the purifying means.

The control apparatus preferably changes the setting for limiting the amount that the flow path area is decreased according to the operating state of the internal combustion engine.

The effect that a decrease in the flow path area when the purifying means is clogged has on the increase in pressure on the upstream side of the purifying means differs depending on the operating state of the internal combustion engine. This structure makes it possible to more suitably set the limit on the amount that the flow path area is decreased by changing the setting of that limit according to the operating state of the internal combustion engine.

Moreover, the control apparatus may also include compensating means for compensating for a decline in the ability of the actual boost pressure to follow the target boost pressure in response to an increase in the degree of clogging of the purifying means when the actual boost pressure is controlled to match the target boost pressure.

When the purifying means is clogged, a pressure difference does not develop as easily between the upstream side and the downstream side of the turbine wheel, which makes it difficult to achieve an increase in the rotation speed of the turbine wheel. As a result, the ability of the actual boost pressure to follow the target boost pressure declines when performing feedback control on the flow path area in order to make the actual boost pressure the target boost pressure.

According to this structure, it is possible to more suitably control the actual boost pressure to the target boost pressure by compensating for the decline in the ability of the actual boost pressure to follow the target boost pressure in response to an increase in the degree of clogging of the purifying means.

Also, the compensating means may change a control mode of the flow path area according to the clogged state of the purifying means.

Here, when the control mode of the flow path area includes at least one of an upper limit guard and a lower limit guard, for example, that upper limit guard and/or lower limit guard may be changed. Also, in a case in which a base value for the flow path area is set according to the operating state of the internal combustion engine and the control mode of the final flow path area is determined according to feedback and the like with that base value as the base, the base value may be corrected according to the clogged state of the purifying means.

Further, the control apparatus may also be adapted to perform feedback control of the flow path area to make an actual boost pressure match the target boost pressure, and the limiting means may change a setting of the target boost pressure according to the clogged state of the purifying means.

In a case in which the base value for the target boost pressure is set according to the operating state of the internal combustion engine and the final target boost pressure is determined according to feedback and the like with that base value as the base, the change in the setting of the target boost pressure may be in the form of a correction of the base value according to the clogged state of the purifying means. Also, when the control mode of the flow path area includes at least one of an upper limit guard and a lower limit guard, for example, that upper limit guard and/or lower limit guard may be changed.

In the control apparatus, the clogged state of the purifying means is preferably quantified by dividing a pressure difference between an upstream side and a downstream side of the purifying means by an intake air quantity.

Even if the clogged state of the purifying means is constant, the pressure difference between the upstream side and the downstream side of the purifying means changes according to the exhaust gas quantity exhausted in the exhaust system of the internal combustion engine. By quantifying the clogged state of the purifying means by dividing the pressure difference between the upstream side and the downstream side of the purifying means by the intake air quantity, this structure makes it possible to more suitably quantify that clogged state while reflecting the actual conditions.

In the foregoing control apparatus, the purifying means may also include a filter that traps particles in the exhaust gas.

The degree of clogging of the filter increases as more particles become trapped in the filter, thus making it possible to preferably display the effects of this control apparatus which limits the amount that the flow path area is decreased according to the degree of clogging.

### BRIEF DESCRIPTION OF THE DRAWINGS

The above-mentioned objects, features, advantages, technical and industrial significance of this invention will be better understood by reading the following detailed description of exemplary embodiments of the invention, when considered in connection with the accompanying drawings, in which:
FIG. 1 is a view of a first exemplary embodiment of the invention, in which a control apparatus for a variable capacity turbocharger is applied to a control apparatus for a variable nozzle turbocharger;
FIG. 2(a) (b) are views of the structure of a variable nozzle mechanism of the variable nozzle turbocharger;
FIG. 3 is a flowchart illustrating a routine for calculating a target boost pressure according to the first exemplary embodiment;
FIG. 4 is a flowchart illustrating a routine for calculating the opening amount of nozzle vanes according to the first exemplary embodiment;
FIG. 5 is a flowchart illustrating a routine for calculating an integral term according to the first exemplary embodiment;
FIG. 6 is a flowchart illustrating a routine for calculating a back pressure according to the first exemplary embodiment;
FIG. 7 is a flowchart illustrating a routine for calculating a target boost pressure according to a second exemplary embodiment of the invention; and
FIG. 8 is a flowchart illustrating a routine for calculating the opening amount of a nozzle vane according to a third exemplary embodiment of the invention.

### DETAILED DESCRIPTION OF THE PREFERRED EMBODIMENTS

In the following description and the accompanying drawings, the present invention will be described in more detail in terms of exemplary embodiments. A control apparatus according to a first exemplary embodiment of the invention, in which a variable capacity turbocharger that is applied to a control apparatus for a variable nozzle turbocharger, will hereinafter be described.

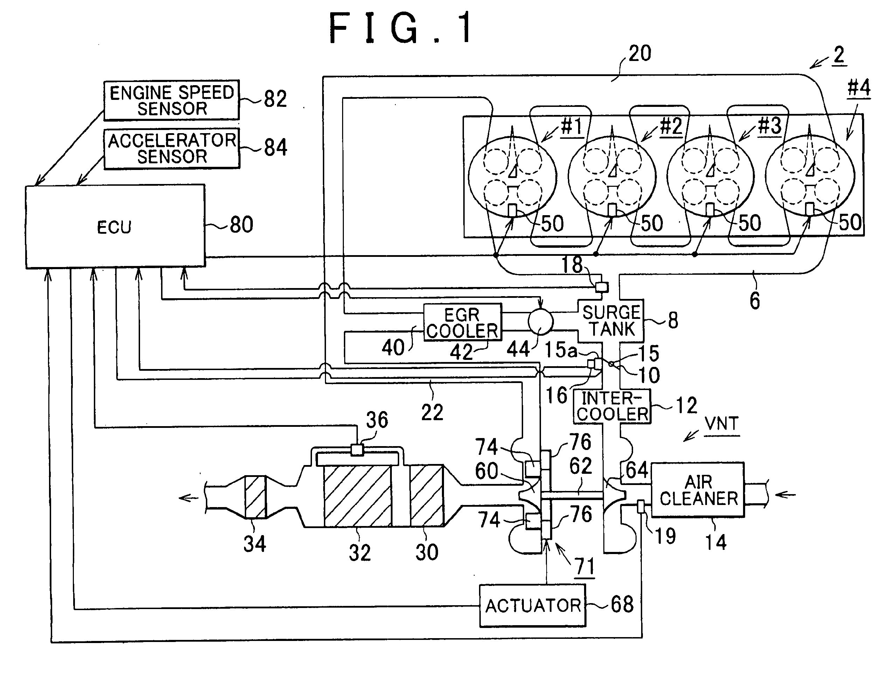

FIG. 1 is a block diagram schematically showing the structure of a control apparatus for a variable nozzle turbocharger. A diesel engine 2 has a plurality of cylinders. In this case, there are four cylinders #1, #2, #3, and #4. A combustion chamber 4 in each of the cylinders #1 to #4 is connected to a surge tank 8 via an intake manifold 6. This surge tank 8 is connected to an inter-cooler 12 and an outlet side of a compressor wheel 64 of a variable nozzle turbocharger VNT via an intake passage 10. The inlet side of the compressor wheel 64 is connected to an air cleaner 14.

A throttle valve 15 which is driven by a motor 15a is provided between the surge tank 8 and the inter-cooler 12 in the intake passage 10. A throttle opening amount sensor 16 that detects the opening amount of the throttle valve 15 is provided near the throttle valve 15. An intake air pressure sensor 18 that detects a pressure within the intake passage 10 is also provided between the intake manifold 6 and the surge tank 8 in the intake passage 10. Further, an intake air flowmeter 19 that detects an intake air quantity is provided upstream of the compressor wheel 64 and downstream of the air cleaner 14 in the intake passage 10.

Also, the combustion chamber 4 of each of the cylinders #1 to #4 is connected to the inlet side of a turbine wheel 60 of the variable nozzle turbocharger VNT via an exhaust manifold 20 and an exhaust passage 22. Three catalysts, i.e., a NOx storage/reduction catalyst 30, an exhaust gas filter 32, and an oxidizing catalyst 34, for purifying the exhaust gas are provided on the outlet side of the turbine wheel 60.

The NOx storage/reduction catalyst 30 is provided farthest upstream. When the exhaust gas is subjected to an oxidizing atmosphere (i.e., when the air-fuel ratio is lean) during normal operation of the diesel engine 2, the NOx storage/reduction catalyst 30 stores NOx. In a reducing atmosphere (i.e., when the air-fuel ratio is the stoichiometric air-fuel ratio or lower), the NOx stored by the NOx storage/reduction catalyst 30 is released as NO and reduced by HC and CO, thus purifying the NOx. It is to be understood that "storage" used herein mean retention of a substance (solid, liquid, gas molecules) in the form of at least one of adsorption, adhesion, absorption, trapping, storage, occlusion, and others.

The exhaust gas filter 32 is provided midstream. This exhaust gas filter 32 has a wall portion of a monolith construction with very tiny holes through which the exhaust gas passes. The surface of this exhaust gas filter 32 is coated with a NOx storage/reduction catalyst, and this exhaust gas filter 32 also purifies the NOx as described above. Further, particulate matter (hereinafter referred to as "PM") in the exhaust gas becomes trapped in the surface of the exhaust gas filter 32. In an oxidizing atmosphere, the PM begins to oxidize by the active oxygen produced when the NOx is absorbed, and then oxidizes entirely as excess oxygen surrounds it. In a reducing atmosphere (i.e., when the air-fuel ratio is the stoichiometric air-fuel ratio or lower), oxidization of the PM is promoted by large quantities of active oxygen produced by the NOx storage/reduction catalyst. This results in not only the purification of NOx but also the purification of PM.

The oxidizing catalyst 34 is provided farthest downstream, which oxidizes, and thereby purifies, HC and CO. A passage in which a differential pressure sensor 36 is provided connects the upstream and downstream sides of the exhaust gas filter 32. Clogging of the exhaust gas filter 32 is able to be determined by the differential pressure sensor 36 based on the detection of a pressure difference between upstream and downstream of the exhaust gas filter 32.

Meanwhile, an EGR passage 40 is provided between the exhaust passage 22 and the surge tank 8. An EGR cooler 42 for cooling EGR gas, as well as an EGR valve 44 are provided in the EGR passage 40. The amount of EGR gas, which is supplied from the exhaust passage 22 side to the surge tank 8 side, can be regulated by adjusting the opening amount of the EGR valve 44.

In each of the cylinders #1 to #4 is provided a fuel injection valve 50 that injects fuel directly into the combustion chambers 4. This fuel injection valve 50 is connected to a common rail via a fuel supply line. Fuel is supplied from an electrically controlled variable delivery fuel pump to the common rail. Pressurized fuel supplied to the common rail from the variable delivery fuel pump is distributed to each of the fuel injection valves 50 via the fuel supply lines.

Next, the variable nozzle turbocharger VNT will be explained further. The variable nozzle turbocharger VNT includes a turbine wheel 60 and a compressor wheel 64. The turbine wheel 60 is rotated by exhaust gas flowing through the exhaust passage 22. The compressor wheel 64 is arranged in the intake passage 10 and connected to the turbine wheel 60 via a rotor shaft 62 so that it is able to rotate together with the turbine wheel 60. In the variable nozzle turbocharger VNT, exhaust gas strikes the turbine wheel 60, causing it to rotate. This rotation is transferred to the compressor wheel 64 via the rotor shaft 62. As a result, in the diesel engine 2, not only is air drawn into the combustion chamber 4 due to negative pressure generated therein as the piston moves, but that air is also forced (i.e., supercharged) into the combustion chamber 4 as the compressor wheel 64 of the variable nozzle turbocharger VNT rotates. As a result, the charging efficiency of air into the combustion chamber 4 is increased.

Also in the variable nozzle turbocharger VNT, an exhaust gas flow path is formed in the direction of rotation of the turbine wheel 60 so as to encompass the outer periphery of the turbine wheel 60. Accordingly, the exhaust gas flows through the exhaust gas flow path toward the axis of the turbine wheel 60. A variable nozzle mechanism 71 made up of a valve mechanism is provided in the exhaust gas flow path. Opening and closing the variable nozzle mechanism 71 changes the area of the exhaust gas flow path, which changes the speed of the flow of the exhaust gas that strikes the turbine wheel 60. By varying the speed of the flow of the exhaust gas in this manner, it is possible to regulate the rotation speed of the turbine wheel 60 and thus the amount of air forced into the combustion chamber 4.

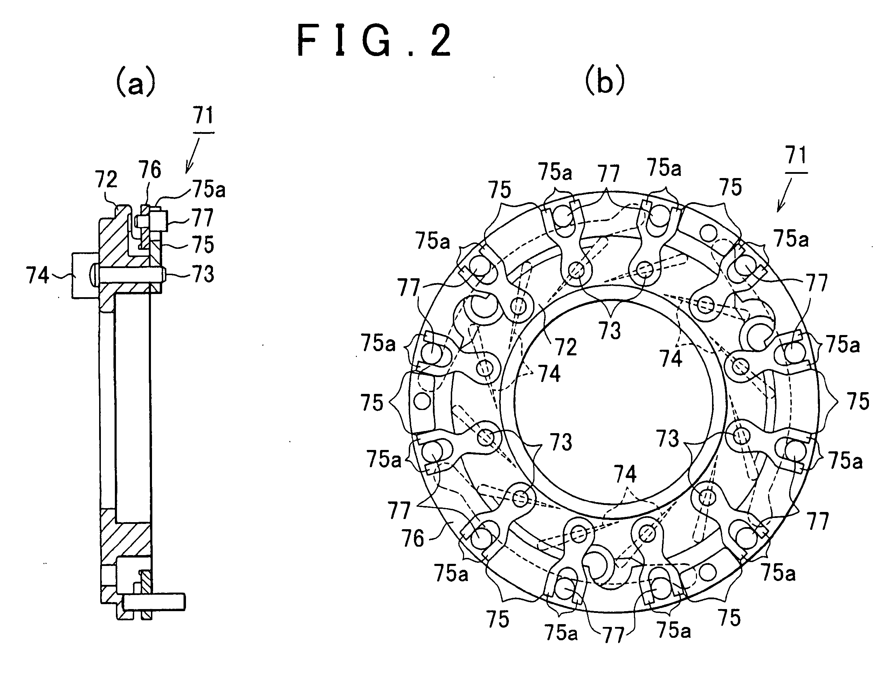

The structure of the variable nozzle mechanism 71 will now be described with reference to FIG. 2. FIG. 2(a) shows a side sectional view of the variable nozzle mechanism 71 and FIG. 2(b) shows a front view of the variable nozzle mechanism 71. As shown in FIG. 2(a), the variable nozzle mechanism 71 includes a nozzle back plate 72 formed in the shape of a ring. On this nozzle back plate 72 are provided a plurality of shafts 73 equiangularly centered around the center of the nozzle back plate 72. These shafts 73 are rotatably supported by passing through the nozzle back plate 72 in the direction of thickness. Also, a nozzle vane 74 is fixed to one end of each of these shafts 73 (the end on the left side of the shaft 73 in FIG. 2(a)), while an open/close lever 75 extending toward the outer edge of the nozzle back plate 72 orthogonal to the shaft 73 is provided on the other end each of the shafts 73. The end of each open/close lever 75 is formed into a two-pronged retaining portion 75a.

An annular ring plate 76 is provided retained between the open/close levers 75 and the nozzle back plate 72. This ring plate 76 is able to rotate around its center. Further, a plurality of pins 77 are provided equiangularly on the ring plate 76 around the center thereof. These pins 77 are retained between the retaining portions 75a of the open/close levers 75, which the pins 77 rotatably support.

When the ring plate 76 is rotated around its center by an actuator 68, shown in FIG. 1, the pins 77 push the retaining portions 75a in the direction of rotation. As a result, the open/close levers 75 rotate the shafts 73. As the shafts 73 rotate, the nozzle vanes 74 also rotate around the axes of their respective shafts 73. This mechanism enables all of the nozzle vanes 74 to be rotated in sync. Also, the size of the gap between adjacent nozzle vanes 74 can be adjusted according to this rotation of the nozzle vanes 74 in this way.

For example, the narrower the gap between the nozzle vanes 74, the smaller the area of the exhaust gas flow path and therefore the greater the speed of the flow of the exhaust gas hitting the turbine wheel 60. Conversely, for example, the larger the gap between the nozzle vanes 74, the greater the area of the exhaust gas flow path and therefore the lower the speed of the flow of the exhaust gas hitting the turbine wheel 60.

Next, the control apparatus for the variable nozzle turbocharger VNT will be described. An electronic control unit (ECU) 80 includes as its main components a digital computer, which includes a CPU, ROM, and RAM and the like, and a drive circuit for driving various devices. The ECU 80 reads detection signals from various sensors such as the differential pressure sensor 36, the throttle opening amount sensor 16, the intake air pressure sensor 18, and the intake air flowmeter 19, and well as a rotation speed sensor 82 that detects the rotation speed of a crankshaft of the diesel engine 2 and an accelerator sensor 84 that detects the depression amount of an accelerator pedal.

Then based on the operating state of the diesel engine 2 obtained from these signals, the ECU 80 executes fuel injection timing control and fuel injection quantity control with the fuel injection valves 50, as well as opening amount control of the EGR valve 44, control of the throttle valve 15 using the motor 15a, and a routine for operating the actuator 68. For example, EGR control is executed in which the throttle opening amount TA, which is detected by a signal from the throttle opening amount sensor 16, and the EGR opening amount (i.e., the opening amount of the EGR valve 56) are adjusted such that the EGR rate becomes a target EGR rate set based on the engine load (or the fuel injection quantity) and the engine speed NE. Moreover, intake air quantity feedback control is executed in which the EGR opening amount is adjusted such that the intake air quantity becomes a target intake air quantity (i.e., a target value per one revolution of the diesel engine 2) that is set based on the engine load (or the fuel injection quantity) and the engine speed NE. The combustion mode executed under EGR control is either a normal combustion mode or a low temperature combustion mode. The low temperature combustion mode in this case is a combustion mode which simultaneously reduces NOx and smoke by slowly increasing the combustion temperature using a large amount of exhaust gas recirculation. In this exemplary embodiment, the low temperature combustion mode is executed in the mid-to-high speed range with a low load. In the normal combustion mode, normal EGR control (which also includes not using EGR) is executed.

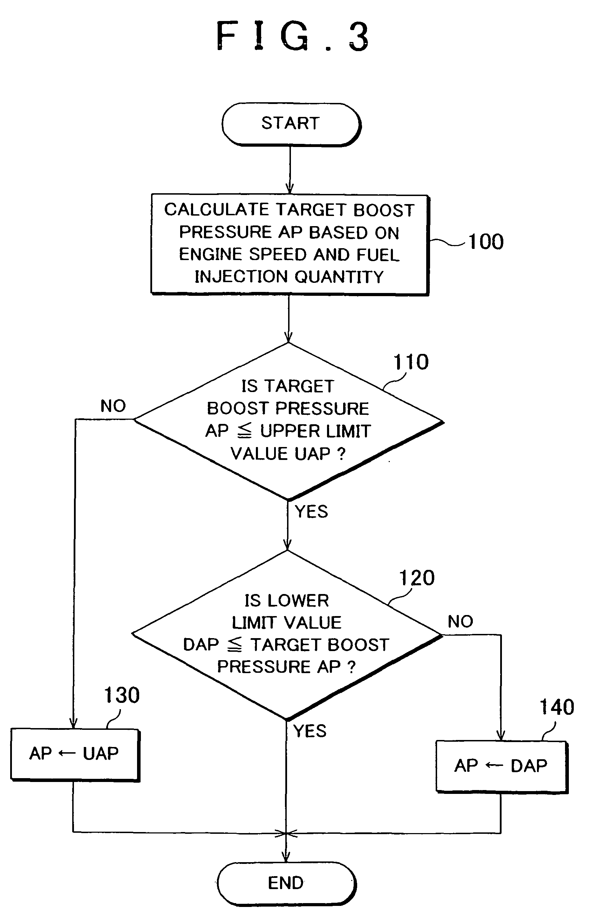

The control of the variable nozzle turbocharger VNT executed by the ECU 80 will now be described. FIG. 3 illustrates a routine for calculating a target boost pressure AP set during control of the variable nozzle turbocharger VNT. This routine is repeatedly executed at predetermined intervals of time by the ECU 80.

First in step S 100 of this routine, the target boost pressure AP is calculated based on the fuel injection quantity and the speed of the diesel engine 2 detected by the rotation speed sensor 82. This calculation may be performed using a two-dimensional map in which, for example, the target boost pressure AP is determined based on the rotation speed and the fuel injection quantity.

In steps S 110 to 140, the target boost pressure AP calculated in step S 100 is limited to within a range that enables, for example, the reliability of the diesel engine 2 to be maintained. That is, if it is determined in step S110 that the target boost pressure AP is greater than an upper limit value UAP, then the target boost pressure AP is substituted with the upper limit value UAP in step S 130. If, on the other hand, it is determined in step S120 that the target boost pressure AP is less than a lower limit value DAP, then the target boost pressure AP is substituted with the lower limit value DAP in step S 140.

When either it is determined in step S120 that the target boost pressure AP is equal to, or greater than, the lower limit value DAP or step S 130 or step S 140 has been completed, this cycle of the routine ends.

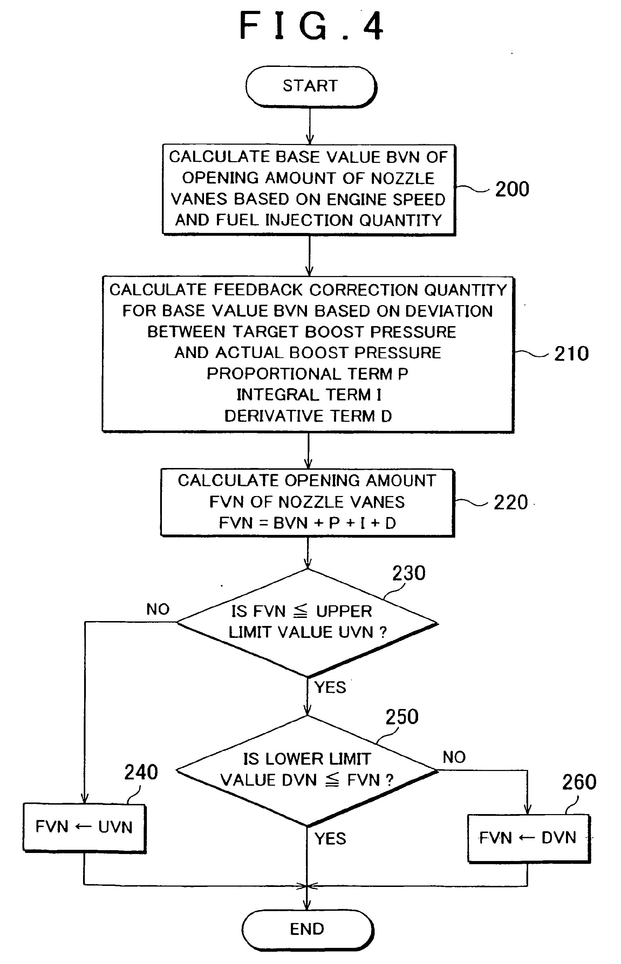

FIG. 4 shows a routine for feedback control of the flow path area of the exhaust gas flow path in order to make the actual boost pressure, which is the value detected by the intake air pressure sensor 18, match the target boost pressure. This routine is repeated at predetermined intervals of time by the ECU 80.

In the routine illustrated in this drawing, a base value BVN of the size of the gap between adjacent nozzle vanes 74 (hereinafter the size of this gap will be referred to as "the opening amount of the nozzle vanes 74") is first calculated in step S200 based on the speed of the diesel engine 2 detected by the rotation speed sensor 82 and the fuel injection quantity. This base value is a value that corresponds to the flow path area that is assumed necessary for making the actual boost pressure detected by the intake air pressure sensor 18 match a predetermined target boost pressure based on the speed of the diesel engine 2 and the fuel injection quantity. In this case, the base value BVN is calculated based on a two-dimensional map in which, for example, the base value BVN of the nozzle vanes 74 is determined based on the rotation speed and the fuel injection quantity.

Next in step S210, a feedback correction quantity for the base value BVN is calculated based on a deviation between the target boost pressure and the actual boost pressure. Here, assuming PID control is used as the feedback control, a proportional term P, an integral term I, and a derivative term D are each calculated based on the deviation between the target boost pressure and the actual boost pressure.

Then in step S220, an opening amount FVN of the nozzle vanes 74 is calculated by adding the feedback correction quantity calculated in step S210 to the base value BVN calculated in step S200.

Then in steps S230 to S260, the opening amount FVN of the nozzle vanes 74 calculated in step S230 is kept within a range that enables, for example, the reliability of the diesel engine 2 to be maintained. That is, if it is determined in step S230 that the opening amount FVN of the nozzle vanes 74 is greater than an upper limit value UVN, then the opening amount FVN of the nozzle vanes 74 is substituted with the upper limit value UVN in step S240. If, on the other hand, it is determined in step S250 that the opening amount FVN of the nozzle vanes 74 is less than a lower limit value DVN, then the opening amount FVN of the nozzle vanes 74 is substituted with the lower limit value DVN in step S260.

When either it is determined in step S250 that the opening amount FVN of the nozzle vanes 74 is equal to, or greater than, the lower limit value DVN or step S240 or step S260 has been completed, this cycle of the routine ends.

Once the opening amount FVN of the nozzle vanes 74 has been calculated in this manner, the nozzle vanes 74 are then controlled based on that opening amount FVN. When the exhaust gas filter 32 is clogged by the trapped PM, however, a pressure difference does not develop as easily between the upstream side and the downstream side of the turbine wheel 60 as it does when the exhaust gas filter 32 is not clogged by PM, which makes it difficult to achieve an increase in the rotation speed of the turbine wheel 60. As a result, the ability of the actual boost pressure to follow the target boost pressure declines when performing feedback control on the opening amount of the nozzle vanes 74 in order to make the actual boost pressure match the target boost pressure. When the ability of the actual boost pressure to follow the target boost pressure declines in this way, the absolute value of the feedback correction value tends to increase to a large value. The absolute value of the integral term I in particular tends to increase to a large value because the value based on the deviation between the actual boost pressure and the target boost pressure accumulates with each cycle of the routine shown in FIG. 4.

If the absolute value of the integral term I becomes large, the opening amount of the nozzle vanes 74 is controlled to be excessively small such that the pressure upstream of the exhaust gas filter 32 in the exhaust passage 22 increases excessively. If the pressure upstream of the exhaust gas filter 32 in the exhaust passage 22 increases excessively in this way, it may reduce the reliability of the diesel engine 2 by, for example, damaging a stem seal that seals a valve stem of the exhaust valve or causing the boost pressure to overshoot the target boost pressure.

Therefore, this exemplary embodiment limits the lower limit value of the integral term I according to the clogged state of the exhaust gas filter 32. In other words, the exemplary embodiment limits the amount that the opening amount of the nozzle vanes 74 is reduced due to the integral term I in accordance with the clogged state of the exhaust gas filter 32. As a result, it is possible to avoid an excessive decrease in the opening amount of the nozzle vanes 74 due to the integral term I.

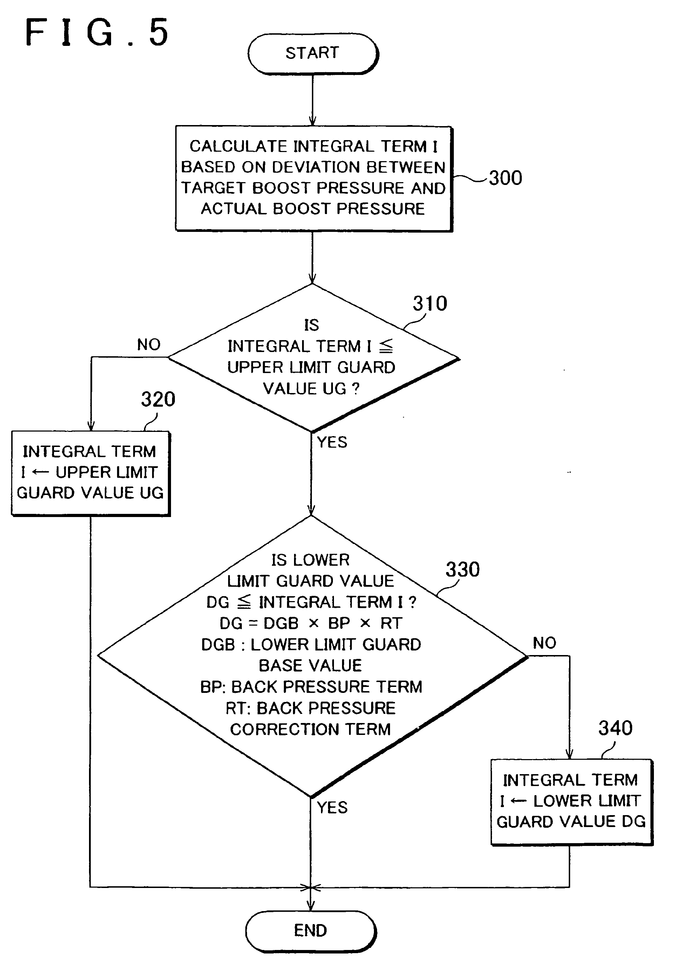

Next, a routine for calculating the integral term, in particular, from among the terms for the feedback correction quantity calculated in step S210, will be described in detail with reference to FIG. 5. FIG. 5 is a flowchart illustrating the routine for calculating the integral term in this exemplary embodiment. This routine is repeatedly executed at predetermined periods of time.

First, in step S300 of this routine, the integral term I is calculated based on the deviation between the target boost pressure and the actual boost pressure. Then in step S310, it is determined whether the integral term I calculated in step S300 is equal to, or less than, an upper limit guard value UG. Here, the upper limit guard value UG is set to the largest allowable value for the increase amount of the opening amount of the nozzle vanes 74 according to the integral term I in one cycle of the routine shown in FIG. 4. If it is determined that the integral term I is larger than the upper limit guard value UG, the integral term I is replaced with the upper limit guard value UG in step S320.

If, on the other hand, it is determined in step S310 that the integral term I is equal to, or less than, the upper limit guard value UG, which is a positive value, the routine proceeds on to step S330. In step S330 it is determined whether the integral term I calculated in step S300 is equal to, or greater than, a lower limit guard value DG, which is a negative value. The lower limit guard value DG is calculated as the product of a lower limit guard base value DGB, a back pressure term BP, and a back pressure correction term RT. Here, the lower limit guard base value DGB is set to the smallest allowable value for a decrease amount of the opening amount of the nozzle vanes 74 according to the integral term I in one cycle of the routine shown in FIG. 4. In this exemplary embodiment, the absolute value of the lower limit guard base value DGB (which is negative) is equal to the upper limit guard value UG (which is positive). Also, the back pressure term BP is a correction term for correcting the lower limit guard value DG based on the clogged state of the exhaust gas filter 32. This back pressure term BP has a positive value. The back pressure correction term RT is a correction term for correcting a correction quantity of the lower limit guard value DG according to the back pressure term BP based on the speed of the diesel engine 2 and the fuel injection quantity. Like the back pressure term BP, this back pressure correction term RT also has a positive value.

If it is determined in step S330 that the integral term I is less than the lower limit guard value DG, the integral term I is replaced with the lower limit guard value DG in step S340. When either it is determined in step S330 that the opening integral term I is equal to, or greater than, the lower limit guard value DG or step S320 or step S340 has been completed, this cycle of the routine ends.

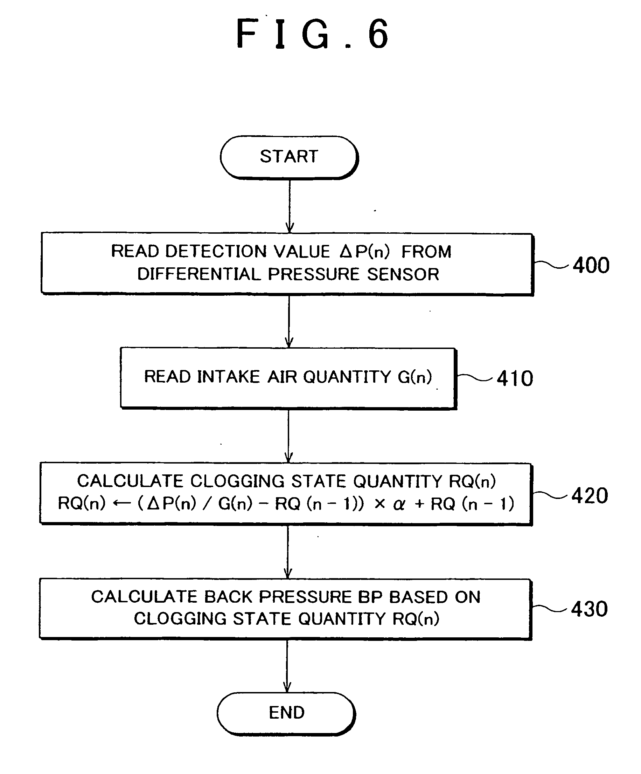

Next, a routine for calculating the back pressure term BP will be described with reference to FIG. 6. This routine is repeatedly executed at predetermined intervals of time by the ECU 80. In this routine, a detection value ΔP(n) of the differential pressure sensor 36 is first read in step S400. Then, an intake air quantity G(n) detected by the intake air flowmeter 19 is read in step S410. In step S420, a clogging state quantity RQ(n), which quantitatively indicates the clogged state of the exhaust gas filter 32, is calculated. This clogging state quantity RQ(n) is basically the quotient of the detection value ΔP(n) from the differential pressure sensor 36 divided by the intake air quantity G(n). This calculation is performed in order to more appropriately quantify the clogged state of the exhaust gas filter 32 by taking into account the fact that the detection value ΔP(n) changes according to the exhaust gas quantity exhausted in the exhaust passage 22 of the diesel engine 2 even if the clogged state of the exhaust gas filter 32 is constant.

Further, when calculating the clogging state quantity RQ(n), so-called smoothing processing is performed, i.e., weighted average processing between the clogging state quantity RQ(n - 1) calculated the last time and the detection value R(n)/G(n) this time is performed. This is done in order to take into account the fact that the detection value ΔP(n) and the value of the intake air quantity G(n) change suddenly due to noise interference. More specifically, the sum of i) the product of a predetermined weight α multiplied by an amount of change in the detection value ΔP(n) / G(n) this time with respect to the clogging state quantity RQ(n - 1) calculated last time and ii) the clogging state quantity RQ (n - 1) calculated last time is made the clogging state quantity RQ(n) this time. The predetermined weight α is preferably less than "1".

In step S430, the back pressure term BP is calculated based on the clogging state quantity RQ(n). Here, the back pressure term BP is made a smaller positive number the greater the value of RQ(n), i.e., the greater the degree of clogging, to suppress an excessive decrease in the opening amount of the nozzle vanes 74.

When step S430 is complete, this cycle of the routine ends. By limiting the amount that the opening amount of the nozzle vanes 74 is decreased due to the integral term I in this way, it is possible to avoid an excessive decrease in the opening amount of the nozzle vanes 74. Furthermore, in order to limit only the amount that the opening amount of the nozzle vanes 74 is decreased due to the integral term I, it is fundamentally possible to adapt to the control of the variable nozzle turbocharger VNT without taking into account the clogged state of the exhaust gas filter 32. Therefore, when an adaptation value for the control of the variable nozzle turbocharger VNT that does not have the exhaust gas filter 32 is already obtained, for example, it is fundamentally possible to use that adaptation value and only change the lower limit guard value DG of the integral term I.

Incidentally, the adaptation value for the control of the variable nozzle turbocharger VNT without the exhaust gas filter 32 is a value that is able to ensure the reliability and controllability with respect to various operating states of the diesel engine 2. That is, the adaptation value is a value that is able to ensure the reliability and controllability of the diesel engine 2 even with respect to, for example, a sudden increase in pressure on the upstream side of the turbo wheel 60 due to a stop in the supply of EGR gas from the exhaust passage 22 side to the surge tank 8 side, or an increase in the integral term I due to repeated acceleration and deceleration. The adaptation value is not, however, a value that takes into account various situations envisioned when the exhaust gas filter 32 is clogged.

In contrast, this exemplary embodiment makes it possible to adapt to the control for the variable nozzle turbocharger VNT with the exhaust gas filter 32 with a simply modification, that is, by setting the back pressure term BP to the lower limit guard value DG of the integral term I.

The exemplary embodiment as described above is able to achieve the following effects.
(1) It is possible to avoid an excessive decrease in the opening amount of the nozzle vanes 74 due to the integral term I, because the lower limit value of the integral term I is limited according to the clogged state of the exhaust gas filter 32.

(2) The clogged state of the exhaust gas filter 32 is quantified by dividing the detection value ΔP(n) from the pressure differential sensor 36 by the intake air quantity G(n). As a result, the clogged state is able to be quantified more appropriately because the fact that the detection value ΔP(n) changes according to the exhaust gas quantity exhausted in the exhaust passage 22 of the diesel engine 2 even if the clogged state of the exhaust gas filter 32 is constant is taken into account.

(3) It is possible to preferably suppress the effects from noise interference on the detection value ΔP(n) and the intake air quantity G(n) by performing weighted average processing between the clogging state quantity RQ(n - 1) calculated the last time and the detection value ΔP(n) / G(n) this time during calculation of the clogging state quantity RQ(n).

A second exemplary embodiment according to the invention, in which a control apparatus for a variable capacity turbocharger is applied to a variable noise turbocharger in a diesel engine, will now be described focusing on the points that are different from the first exemplary embodiment.

The first exemplary embodiment aims to avoid an excessive decrease in the opening amount of the nozzle vanes 74 by limiting the lower limit value of the integral term I according to the clogged state of the exhaust gas filter 32. In contrast, the second exemplary embodiment aims to avoid an excessive decrease in the opening of the nozzle vanes 74 by limiting the value of the target boost pressure AP based on the clogging state quantity RQ.

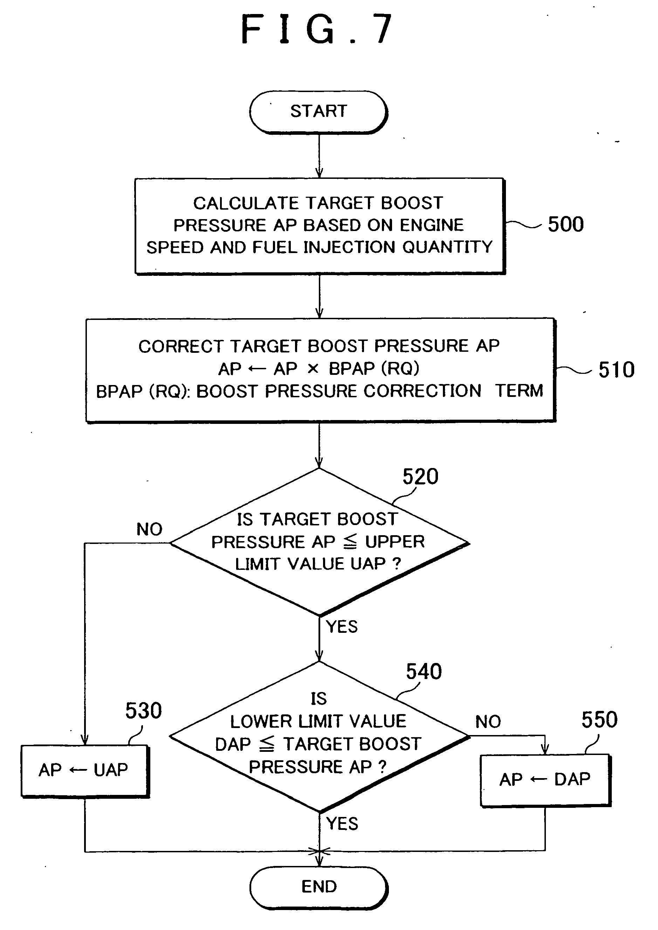

FIG. 7 illustrates a routine for calculating the target boost pressure according to this exemplary embodiment. This routine is repeatedly executed at predetermined intervals of time by the ECU 80. First in step S500 of this routine, the target boost pressure AP is calculated just as it is in step S100 of FIG. 3. Then in step S510, the target boost pressure AP is corrected by multiplying a boost pressure correction term BPAP(RQ) by the target boost pressure AP calculated in step S500. Incidentally, the boost pressure correction term BPAP(RQ) is set based on the clogging state quantity RQ calculated according to a routine similar to the routine shown in FIG. 6. Also, this boost pressure correction term BPAP(RQ) is set to become a smaller value the greater the degree of clogging. That is, the boost pressure correction term BPAP(RQ) is set to a value that limits the value of the target boost pressure AP from increasing the greater the degree of clogging.

When step S510 is complete, steps S520 to S550, which are similar to steps S110 to S 140 in FIG. 3, are performed. Control to make the actual boost pressure match the target boost pressure AP calculated in this way is executed according to the routine shown in FIG. 4. At this time, however, the step in the routine shown in FIG. 5 for correcting the lower limit guard value DG based on the base pressure term BP and the base pressure correction term RT is not performed as the step for correcting calculating the integral term I.

In addition to the foregoing effects (2) and (3) achieved by the first exemplary embodiment, the second embodiment also achieves the following effect. (4) An excessive decrease in the opening amount of the nozzle vanes 74 can be avoided by limiting the value of the target boost pressure AP based on the clogging state quantity RQ.

A third exemplary embodiment according to the invention, in which a control apparatus for a variable capacity turbocharger is applied to a variable noise turbocharger in a diesel engine, will now be described focusing on the points that are different from the first exemplary embodiment.

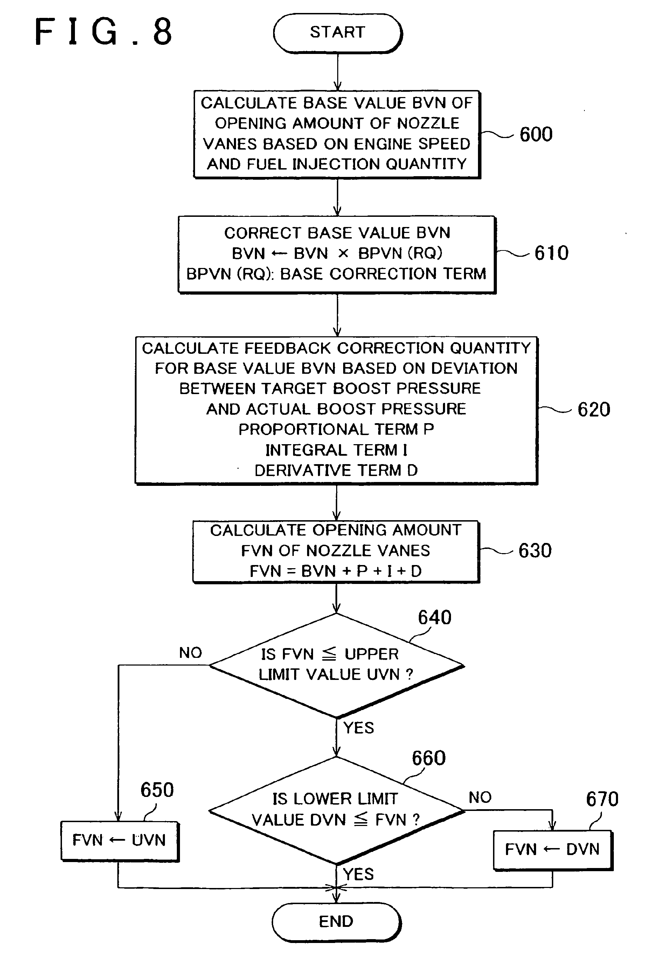

In this third exemplary embodiment, the base value BVN of the opening amount of the nozzle vanes 74 calculated in step S200 in FIG. 4 is first corrected based on the clogging state quantity RQ. FIG. 8 illustrates a routine for calculating the opening amount FVN of the nozzle vanes 74 according to the third exemplary embodiment. This routine is repeatedly executed at predetermined intervals of time by the ECU 80.

In step S600 of this routine, the base value BVN of the opening amount of the nozzle vanes 74 is calculated in a step similar to step S200 in FIG. 4. Then in step S610, the base value BVN is corrected based on the clogging state quantity RQ. That is, the product of a base correction term BPVN multiplied by the base value BVN calculated in step S600 is made the new base value BVN.

Here, the base correction term BPVN is set differently depending on the case, as described below, for example.
(a) When correcting the base value BVN to ensure reliability of the diesel engine 2.
   In this case, the base correction term BPVN is set to decrease the greater the degree of clogging of the exhaust gas filter 32. In other words, the base correction term BPVN is set so that the base value BVN decreases the greater the degree of clogging of the exhaust gas filter 32.
(b) When compensating for a decline in the ability of the actual boost pressure to follow the target boost pressure in response to an increase in the degree of clogging of the exhaust gas filter 32. In this case, the base correction term BPVN is set to increase the greater the degree of clogging of the exhaust gas filter 32. In other words, the base correction term BPVN is set so that the base value BVN increases the greater the degree of clogging of the exhaust gas filter 32.

It is actually preferable to apply both (a) and (b) above appropriately according to the operating state of the diesel engine 2. When correcting the base value in this way, steps S620 to S670, which are similar to steps S210 to S260 in FIG. 4, are performed.

In addition to the effects of (2) and (3) above achieved by the first exemplary embodiment, the third exemplary embodiment also achieves the following effect.
(5) The opening amount of the nozzle vanes 74 is able to be more appropriately controlled taking into account the degree of clogging of the exhaust gas filter 32 by correcting the base value BVN according to that degree of clogging.

The foregoing exemplary embodiments may also be implemented with the following modifications.
- The purifying means for purifying the exhaust gas in the internal combustion engine is not limited to the exhaust gas filter 32.

- The feedback control for the flow path area to make the actual boost pressure match the target boost pressure is not limited to PID control.
- The factor that limits the amount that the flow path area is decreased by the feedback correction quantity calculated based on the deviation between the actual boost pressure and the target boost pressure is not limited to the example in the first exemplary embodiment. For example, the amount of flow path area may alternatively be limited by the proportional term P or the like.

- The factor that limits the amount that the flow path area is decreased by limiting the setting of the target boost pressure according to the clogged state of the purifying means is not limited to the example in the second exemplary embodiment. Alternatively, for example, the upper limit value UAP of the target boost pressure in FIG. 7 may be corrected according to the clogging state quantity RQ.

- The limiting means for limiting the amount that the flow path area is decreased according to the clogged state of the purifying means is not limited to the examples in the first to the third embodiments nor the modifications thereof.
- The method for quantifying the clogged state of the purifying means by dividing the pressure difference between the upstream and downstream sides of the purifying means by the intake air quantity is not limited to using the clogging state quantity RQ. Alternatively, for example, the intake air quantity, which is the denominator in the fraction "pressure difference / intake air quantity", may also be, for example, a value calculated based on the flow rate of gas on the downstream side of the surge tank 8.

- The compensating means for changing the control mode of the flow path area according to the clogged state of the purifying means to compensate for a decline in the ability of the actual boost pressure to follow the target boost pressure in response to an increase in the degree of clogging of the purifying means is not limited to the example illustrated in the third exemplary embodiment. Alternatively, for example, means for changing a feedback gain according to the clogged state of the purifying means may be used.

- The compensating means for compensating for a decline in the ability of the actual boost pressure to follow the target boost pressure in response to an increase in the degree of clogging of the purifying means is not limited to means for changing the control mode of the flow path area according to the clogged state of the purifying means. Alternatively, for example, means for changing the setting of the target boost pressure in accordance with the clogged state of the purifying means may be used.

- The control apparatus for a variable capacity turbocharger that regulates the boost pressure by controlling the area of the exhaust gas flow path on the upstream side of the turbine wheel which is upstream of purifying means for purifying the exhaust gas in the internal combustion engine is not limited to a control apparatus for a variable nozzle turbocharger VNT.

## Claims

1. A control apparatus for a variable capacity turbocharger which regulates a boost pressure by controlling an exhaust gas flow path area on an upstream side of a turbine wheel (60) that is upstream of purifying means (30, 32, 34) for purifying exhaust gas in an internal combustion engine (2), **characterised by** further comprising:
limiting means (71, 80) for limiting an amount that the flow path area is decreased according to a clogged state of the purifying means (30, 32, 34), wherein the amount that the flow path area is decreased is smaller the higher the degree of clogging of the purifying means (30, 32, 34) is.

2. The control apparatus according to claim 1, **characterised in that** the control apparatus is adapted to perform feedback control of the flow path area to make an actual boost pressure match a target boost pressure (AP), and the limiting means (71, 80) limits the amount that the flow path area is decreased according to a feedback correction quantity (P, I, D) calculated based on a deviation between the actual boost pressure and the target boost pressure (AP).

3. The control apparatus according to claim 2, **characterised in that** the feedback control includes integral control, and the amount that the flow path area is decreased includes an amount I that the flow path area is decreased by the integral control.

4. The control apparatus according to claim 1, **characterised in that** the control apparatus is adapted to perform feedback control of the flow path area to make an actual boost pressure match a target boost pressure (AP), and the limiting means (71, 80) limits the amount that the flow path area is decreased by limiting a setting of the target boost pressure (AP) according to the clogged state of the purifying means (30, 32, 34).

5. The control apparatus according to any one of claims 1 to 4, **characterised in that** the setting for limiting the amount that the flow path area is decreased changes according to the operating state of the internal combustion engine (2).

6. The control apparatus according to claim 1, **characterised by** further comprising:
compensating means (71, 80) for compensating for a decline in the ability of the actual boost pressure to follow the target boost pressure (AP) in response to an increase in the degree of clogging of the purifying means (30, 32, 34) when the actual boost pressure is controlled to match the target boost pressure (AP).

7. The control apparatus according to claim 6, **characterised in that** the compensating means (71, 80) changes a control mode of the flow path area according to the clogged state of the purifying means (30, 32, 34).

8. The control apparatus according to claim 6, **characterised in that** the control apparatus is adapted to perform feedback control of the flow path area to make an actual boost pressure match the target boost pressure (AP), and the limiting means (71, 80) changes a setting of the target boost pressure (AP) according to the clogged state of the purifying means (30, 32, 34).

9. The control apparatus according to any one of claims 1 to 8, **characterised in that** the clogged state of the purifying means (30, 32, 34) is quantified by dividing a pressure difference (ΔP(n)) between an upstream side and a downstream side of the purifying means (30, 32, 34) by an intake air quantity (G(n)).

10. The control apparatus according to any one of claims 1 to 9, **characterised in that** the purifying means (30, 32, 34) includes a filter (32) that traps particles in the exhaust gas.

11. The control apparatus according to claim 7, **characterised in that** the greater the degree of clogging, an excessive decrease is suppressed in the opening amount of nozzle vanes (74).

## Patentansprüche

1. Steuervorrichtung für einen Turbolader mit variabler Kapazität, zum Regulieren eines Ladedrucks durch Steuern eines Abgas-Strömungswegquerschnitts auf einer Seite stromaufwärts von einem Turbinenrad (60), das sich stromaufwärts von einem Reinigungsmittel (30, 32, 34) zum Reinigen von Abgas in einem Verbrennungsmotor (2) befindet, **dadurch gekennzeichnet, dass** sie ferner aufweist:
ein Begrenzungsmittel (71, 80), zum Begrenzen des Betrags, um den der Strömungswegquerschnitt verkleinert wird, gemäß einem Verstopfungszustand des Reinigungsmittels (30, 32, 34), wobei der Betrag, um den der Strömungswegquerschnitt verkleinert wird, umso geringer ist, je größer der Grad der Verstopfung des Reinigungsmittels (30, 32, 34) ist.

2. Steuervorrichtung nach Anspruch 1, **dadurch gekennzeichnet, dass** die Steuervorrichtung dafür ausgelegt ist, eine Rückkopplungssteuerung des Strömungswegquerschnitts durchzuführen, um einen aktuellen Ladedruck mit einem Ziel-Ladedruck (AP) in Einklang zu bringen, und wobei das Begrenzungsmittel (71, 80) den Betrag, um den der Strömungswegquerschnitt verkleinert wird, gemäß einem Rückkopplungs-Korrekturbetrag (P, I, D) begrenzt, der aufgrund einer Abweichung zwischen dem aktuellen Ladedruck und dem Ziel-Ladedruck (AP) berechnet wird.

3. Steuervorrichtung nach Anspruch 2, **dadurch gekennzeichnet, dass** die Rückkopplungssteuerung eine Integralsteuerung beinhaltet, und dass der Betrag, um den der Strömungswegquerschnitt verkleinert wird, einen Betrag I beinhaltet, um den der Strömungswegquerschnitt durch die Integralsteuerung verkleinert wird.

4. Steuervorrichtung nach Anspruch 1, **dadurch gekennzeichnet, dass** die Steuervorrichtung dafür ausgelegt ist, eine Rückkopplungssteuerung des Strömungswegquerschnitts durchzuführen, um einen aktuellen Ladedruck mit einem Ziel-Ladedruck (AP) in Einklang zu bringen, und dass das Begrenzungsmittel (71, 80) den Betrag, um den der Strömungswegquerschnitt verkleinert wird, durch Begrenzen einer Einstellung des Ziel-Ladedrucks (AP) gemäß dem Verstopfungszustand des Reinigungsmittels (30, 32, 34) begrenzt.

5. Steuervorrichtung nach einem der Ansprüche 1 bis 4, **dadurch gekennzeichnet, dass** die Einstellung für die Begrenzung des Betrags, um den der Strömungswegquerschnitt verkleinert wird, gemäß dem Betriebszustand des Verbrennungsmotors (2) geändert wird.

6. Steuervorrichtung nach Anspruch 1, **dadurch gekennzeichnet, dass** sie ferner aufweist:
ein Kompensierungsmittel (71, 80), zum Kompensieren einer Abnahme der Fähigkeit des aktuellen Ladedrucks, dem Ziel-Ladedruck (AP) zu folgen, infolge einer Zunahme der Verstopfung des Reinigungsmittels (30, 32, 34), wenn der aktuelle Ladedruck so gesteuert wird, dass er mit dem Ziel-Ladedruck (AP) in Einklang kommt.

7. Steuervorrichtung nach Anspruch 6, **dadurch gekennzeichnet, dass** das Kompensierungsmittel (71, 80) einen Steuermodus des Strömungswegquerschnitts gemäß dem Verstopfungszustand des Reinigungsmittels (30, 32, 34) ändert.

8. Steuervorrichtung nach Anspruch 6, **dadurch gekennzeichnet, dass** die Steuervorrichtung dafür ausgelegt ist, eine Rückkopplungssteuerung des Strömungswegquerschnitts durchzuführen, um einen aktuellen Ladedruck mit einem Ziel-Ladedruck (AP) in Einklang zu bringen, und dass das Begrenzungsmittel (71, 80) eine Einstellung des Ziel-Ladedrucks (AP) gemäß dem Verstopfungszustand des Reinigungsmittels (30, 32, 34) begrenzt.

9. Steuervorrichtung nach einem der Ansprüche 1 bis 8, **dadurch gekennzeichnet, dass** der Verstopfungszustand des Reinigungsmittels (30, 32, 34) durch Teilen einer Druckdifferenz (ΔP(n)) zwischen einer Seite stromaufwärts und einer Seite stromabwärts vom Reinigungsmittel (30, 32, 34) durch eine angesaugte Luftmenge (G(n)) quantifiziert wird.

10. Steuervorrichtung nach einem der Ansprüche 1 bis 9, **dadurch gekennzeichnet, dass** das Reinigungsmittel (30, 32, 34) einen Filter aufweist, der Teilchen im Abgas einfängt.

11. Steuervorrichtung nach Anspruch 7, **dadurch gekennzeichnet, dass** mit zunehmendem Verstopfungsgrad eine übermäßige Verkleinerung des Öffnungsgrads von Düsenleitschaufeln (74) verhindert wird.

## Revendications

1. Appareil de commande pour un turbocompresseur à capacité variable qui régule une pression de suralimentation en commandant une aire du chemin d'écoulement des gaz d'échappement sur un côté amont d'une roue de turbine (60) qui se trouve en amont de moyens de purification (30, 32, 34) pour purifier des gaz d'échappement dans un moteur à combustion interne (2), **caractérisé par** le fait de comprendre en outre:
des moyens de limitation (71, 80) pour limiter une quantité par laquelle l'air du chemin d'écoulement est réduite selon un état de colmatage des moyens de purification (30, 32, 34), dans lequel plus le degré de colmatage des moyens de purification (30, 32, 34) est élevé plus la quantité de réduction de l'aire du chemin d'écoulement est faible.

2. Appareil de commande selon la revendication 1, **caractérisé en ce que** l'appareil de commande est adapté pour exécuter une commande à rétroaction de l'aire du chemin d'écoulement pour amener une pression de suralimentation effective à correspondre à une pression (AP) de suralimentation cible, et les moyens de limitation (71, 80) limitent la quantité par laquelle l'aire du chemin d'écoulement est réduite selon une grandeur (P, I, D) de correction par rétroaction calculée sur la base d'une déviation entre la pression de suralimentation effective et la pression (AP) de suralimentation cible.

3. Appareil de commande selon la revendication 2, **caractérisé en ce que** la commande à rétroaction comporte une commande intégrale, et la quantité par laquelle l'aire du chemin d'écoulement est réduite comporte une quantité I par laquelle la commande intégrale réduit l'aire du chemin d'écoulement.

4. Appareil de commande selon la revendication 1, **caractérisé en ce que** l'appareil de commande est adapté pour exécuter une commande à rétroaction de l'aire du chemin d'écoulement pour amener une pression de suralimentation effective à correspondre à une pression (AP) de suralimentation cible, et les moyens de limitation (71, 80) limitent la quantité par la quelle l'aire du chemin d'écoulement est réduite en limitant un réglage de la pression (AP) de suralimentation cible selon l'état de colmatage des moyens de purification (30, 32, 34).

5. Appareil de commande selon l'une quelconque des revendications 1 à 4, **caractérisé en ce que** le réglage destiné à limiter la quantité par laquelle l'aire du chemin d'écoulement est réduite varie selon l'état de fonctionnement du moteur à combustion interne (2).

6. Appareil de commande selon la revendication 1, **caractérisé par** le fait de comprendre en outre:
des moyens de compensation (71, 80) pour compenser une dégradation de la capacité de la pression de suralimentation effective de suivre la pression (AP) de suralimentation cible en réponse à une augmentation du degré de colmatage des moyens de purification (30, 32, 34) lorsqu'on commande la pression de suralimentation effective pour qu'elle corresponde à la pression (AP) de suralimentation cible.

7. Appareil de commande selon la revendication 6, **caractérisé en ce que** les moyens de compensation (71, 80) modifient un mode de commande de l'aire du chemin d'écoulement selon l'état de colmatage des moyens de purification (30, 32, 34).

8. Appareil de commande selon la revendication 6, **caractérisé en ce que** l'appareil de commande est adapté pour exécuter une commande à rétroaction de l'aire du chemin d'écoulement pour amener une pression de suralimentation effective à correspondre à une pression (AP) de suralimentation cible, et les moyens de limitation (71, 80) modifient un réglage de la pression (AP) de suralimentation cible selon l'état de colmatage des moyens de purification (30, 32, 34).

9. Appareil de commande selon l'une quelconque des revendications 1 à 8, **caractérisé en ce que** l'état de colmatage des moyens de purification (30, 32, 34) est quantifié en divisant une différence de pression (ΔP(n)) entre un côté amont et un côté aval des moyens de purification (30, 32, 34) par une quantité d'air d'admission (G(n)).

10. Appareil de commande selon l'une quelconque des revendications 1 à 9, **caractérisé en ce que** les moyens de purification (30, 32, 34) comportent un filtre (32) qui piège les particules qui se trouvent dans les gaz d'échappement.

11. Appareil de commande selon la revendication 7, **caractérisé en ce que** plus le degré de colmatage est important, plus on supprime une diminution excessive de la quantité d'ouverture d'aubes de tuyère (74).
